**Europäisches Patentamt**

**European Patent Office**

**Office européen des brevets**

(19)

(11) Numéro de publication : **0 373 023 B1**

(12) **FASCICULE DE BREVET EUROPEEN**

(45) Date de publication du fascicule du brevet :
02.09.92 Bulletin 92/36

(51) Int. Cl.$^5$ : **B29C 51/16, B29C 45/14**

(21) Numéro de dépôt : **89403215.0**

(22) Date de dépôt : **21.11.89**

(54) **Dispositif pour mettre en place des pellicules dans une machine de moulage.**

(30) Priorité : **22.11.88 FR 8815166**

(43) Date de publication de la demande :
**13.06.90 Bulletin 90/24**

(45) Mention de la délivrance du brevet :
**02.09.92 Bulletin 92/36**

(84) Etats contractants désignés :
**AT BE CH DE ES GB GR IT LI LU NL SE**

(56) Documents cités :
**EP-A- 0 238 764**
**DE-A- 1 915 388**
**FR-A- 2 009 611**
**FR-A- 2 606 701**
**FR-A- 2 606 702**

(73) Titulaire : **TOLKKI OY**
**Kalkkimaentie 2**
**03100 Nummela (FI)**

(72) Inventeur : **Dromigny, Pierre**
**54 Avenue de Versailles**
**F-75016 Paris (FR)**

(74) Mandataire : **Bonnetat, Christian**
**CABINET BONNETAT 23, Rue de Léningrad**
**F-75008 Paris (FR)**

EP 0 373 023 B1

## Description

La présente invention concerne un dispositif pour mettre en place, dans une machine de moulage d'un objet comportant deux pièces, dont au moins l'une est mobile par rapport à l'autre suivant une première direction, des pellicules de format déterminé. De tels dispositifs sont généralement connus dans ce domaine technique, notamment par les brevets FR-A-2 606 701 et FR-A-2 606 702.

De telles pellicules sont destinées à servir de revêtement au moins partiel d'un objet moulé, en étant "intégrées" à l'objet lors du moulage de celui-ci. Elles peuvent servir de support à un décor, des informations sur le contenu de l'objet, une indication de marque, etc...

Jusqu'à présent, on n'a pas résolu, de manière absolument efficace, le problème consistant à revêtir, in situ, c'est-à-dire dans le moule, la surface latérale et une face d'extrémité d'un objet comme par exemple un pot de forme générale tronconique (ou éventuellement cylindrique), et cela de façon automatique et donc rapide.

Dans cet esprit, la présente invention concerne un dispositif pour mettre en place, dans une machine de moulage d'un objet comportant deux pièces, dont au moins l'une est mobile par rapport à l'autre suivant une première direction, des pellicules de format déterminé, destinées à servir de revêtement au moins partiel de la surface latérale et d'une face d'extrémité dudit objet, remarquable en ce qu'il comprend :

    – un premier magasin contenant une pluralité de premières pellicules destinées à revêtir, chacune, une face d'extrémité dudit objet,

    – un second magasin contenant une pluralité de secondes pellicules destinées à revêtir, chacune, la surface latérale dudit objet,

    – un organe, présentant une forme extérieure correspondant à celle de l'objet à revêtir, susceptible de prélever, dans lesdits premier et second magasins, des première et seconde pellicules, respectivement,

    – des premiers et seconds moyens pour appliquer et maintenir lesdites première et seconde pellicules contre ledit organe, et,

    – des moyens de transport dudit organe de prélèvement, avec les pellicules qui y sont appliquées, dans la matrice de ladite machine prévue dans l'une desdites pièces.

On peut ainsi, grâce au dispositif de l'invention, revêtir simultanément la surface larérale et une face d'extrémité d'un objet moulé, les pellicules utilisées pour ce faire étant amenées dans la matrice de la machine de moulage à l'aide d'un organe unique de prélèvement desdites pellicules dans des premier et second magasins.

Selon une autre caractéristique de l'invention, l'organe de prélèvement prélève une première pellicule dans ledit premier magasin par l'intermédiaire de premiers moyens de dépression associés à des moyens de déplacement, destinés à amener ladite pellicule dudit magasin audit organe, contre une face d'extrémité de ce dernier, et des deuxièmes moyens de dépression sont répartis sur ladite face d'extrémité.

Selon encore une autre caractéristique de l'invention, ledit organe de prélèvement est associé à des moyens destinés à le faire tourner autour de son axe longitudinal de façon que, pendant la rotation dudit organe sur lui-même, la pellicule qui est appliquées sur sa surface latérale s'enroule au moins partiellement autour de celle-ci, et ledit organe présente des troisièmes moyens de dépression répartis sur toute la surface latérale de celui-ci.

Avantageusement, un galet d'appui est susceptible de s'appliquer sur la surface latérale dudit organe, de façon à maintenir une seconde pellicule contre celle-ci.

Selon une autre caractéristique de l'invention, le dispositif comprend des moyens de déplacement dudit organe parallèlement à ladite première direction.

De préférence, les moyens de transport dudit organe de prélèvement comportent un système de deux crémaillères croisées, engrenées l'une avec l'autre, dont l'une, parallèle à ladite première direction, est solidaire d'une première pièce de ladite machine, et l'autre, qui est parallèle à une seconde direction orthogonale à ladite première direction et qui peut coulisser dans un guide solidaire de la seconde pièce de la machine, est solidaire dudit organe de prélèvement.

Selon encore d'autres caractéristiques de l'invention, ledit premier magasin est solidaire de la pièce de la machine de moulage comportant ladite matrice, et/ou ledit second magasin est déplaçable orthogonalement à ladite première direction.

Par ailleurs, ledit organe de prélèvement peut présenter au moins sensiblement une forme tronconique.

Les figures du dessin annexé feront bien comprendre comment l'invention peut être réalisée.

La figure 1 illustre schématiquement un exemple de réalisation du dispositif de l'invention appliqué à une machine de moulage.

Les figures 2 à 9 montrent les différentes étapes de fonctionnement du dispositif de la figure 1.

Dans l'exemple de réalisation représenté, le dispositif 1 de l'invention est appliqué à une machine de moulage 2 d'un objet comportant deux parties de moule mâle 3 et femelle 4, dont au moins l'une est mobile par rapport à l'autre suivant une première direction X,X', et présentant, respectivement, un poinçon 5 et une matrice 6.

Le dispositif 1 de l'invention est destiné à la mise en place de pellicules de format déterminé, qui doivent servir de revêtement au moins partiel de la surface latérale et d'une face d'extrémité de l'objet moulé, dans la matrice 6 de la partie de moule femelle 4. (Les pellicules seront intégrées, lors du moulage, à l'objet et pourront servir de support à un décor, des informations sur le contenu de l'objet, une indication de marque, etc...).

A cet effet, il est prévu un premier magasin 7 contenant une pluralité de premières pellicules 8 destinées à revêtir, chacune, une face d'extrémité de l'objet moulé, le magasin 7 étant, dans cet exemple de réalisation, solidaire de la partie de moule femelle 4. Un second magasin 9 contient une pluralité de secondes pellicules 10 destinées à revêtir, chacune, la surface latérale de l'objet moulé. Le magasin 9 est monté mobile suivant une direction approximativement perpendiculaire à la direction X,X' sur des guides 11, eux-mêmes montés sur une équerre de support 12 solidaire de la partie de moule femelle 4. Le déplacement du magasin 9 le long des guides 11 est assuré par un vérin à course linéaire 13.

Par ailleurs, le dispositif 1 comprend un organe 14, présentant une forme extérieure correspondant a celle de l'objet à revêtir, susceptible de prélever, dans les premier 7 et second 9 magasins, des première 8 et seconde 10 pellicules, respectivement. Pour cela, on prévoit des moyens d'aspiration sur la face d'extrémité 14a de l'organe 14 (flèches 35) et sur sa surface latérale 14b (flèches 36). L'objet moulé peut, par exemple, présenter une forme tronconique et constituer un pot destiné à contenir une préparation lactée notamment. L'organe de prélèvement 14 présente alors, comme cela est représenté, une forme tronconique correspondante.

L'organe de prélèvement 14 est monté sur un support 15 déplaçable, à l'aide d'un vérin à course linéaire 16, le long de guides 17, parallèlement à la direction X,X'. De plus, l'organe de prélèvement 14 peut être entraîné en rotation autour de son axe longitudinal, parallèle à la direction X,X', à l'aide d'un vérin rotatif 18 par l'intermédiaire de pignons 19 et 20, engrenés l'un avec l'autre. Par ailleurs, le support 15 porte également un galet d'appui 21 d'une pellicule contre l'organe 14, dont le rôle sera expliqué plus en détail par la suite, et qui peut pivoter, autour d'un axe 22, sous l'action d'un vérin à course linéaire 23.

Le prélèvement d'une pellicule 8 dans le magasin 7 s'effectue en fait par l'intermédiaire d'une ventouse 24 animée par un vérin à course linéaire 25 et un vérin rotatif 26.

Le dispositif 1 comprend de plus deux crémaillères 27,28 croisées, engrenées l'une avec l'autre, dont l'une 27, parallèle à la première direction X,X', est solidaire, par l'intermédiaire d'une équerre de support 29, de la partie de moule mâle 3, et dont l'autre 28, parallèle à une seconde direction Y,Y' orthogonale à la direction X,X', peut coulisser dans un guide 30 solidaire de l'autre partie 4 du moule par l'intermédiaire d'une équerre de support 31. En outre, la crémaillère 28 est solidaire du support 15 de l'organe de prélèvement 14 par l'intermédiaire d'un cadre 32 mobile parallèlement à la direction Y,Y' le long de guides 33.

Le fonctionnement du dispositif qui vient d'être décrit est le suivant.

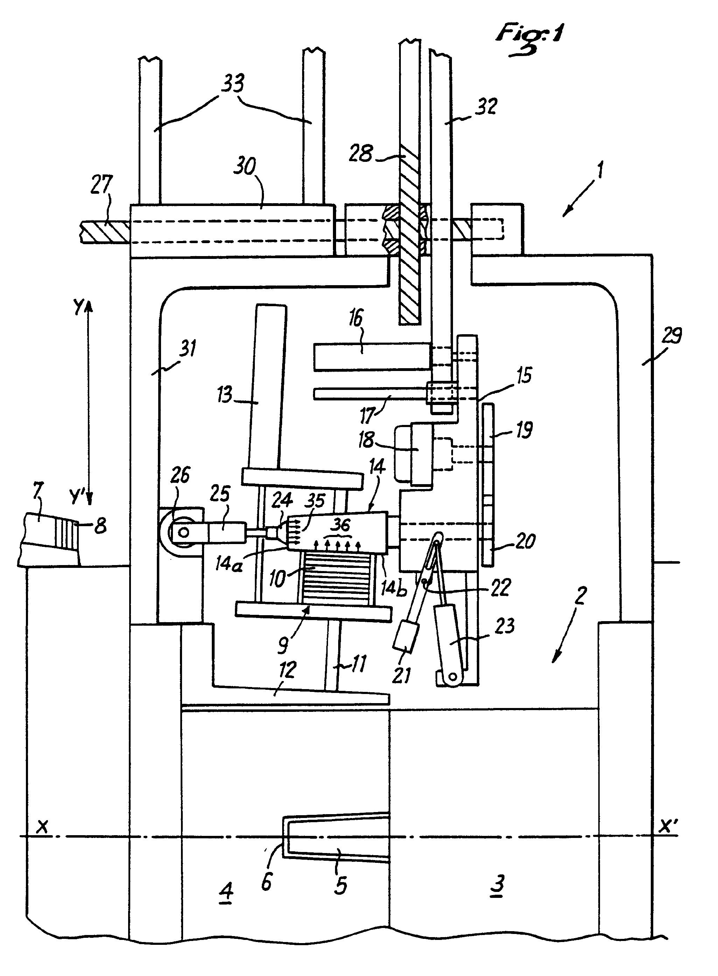

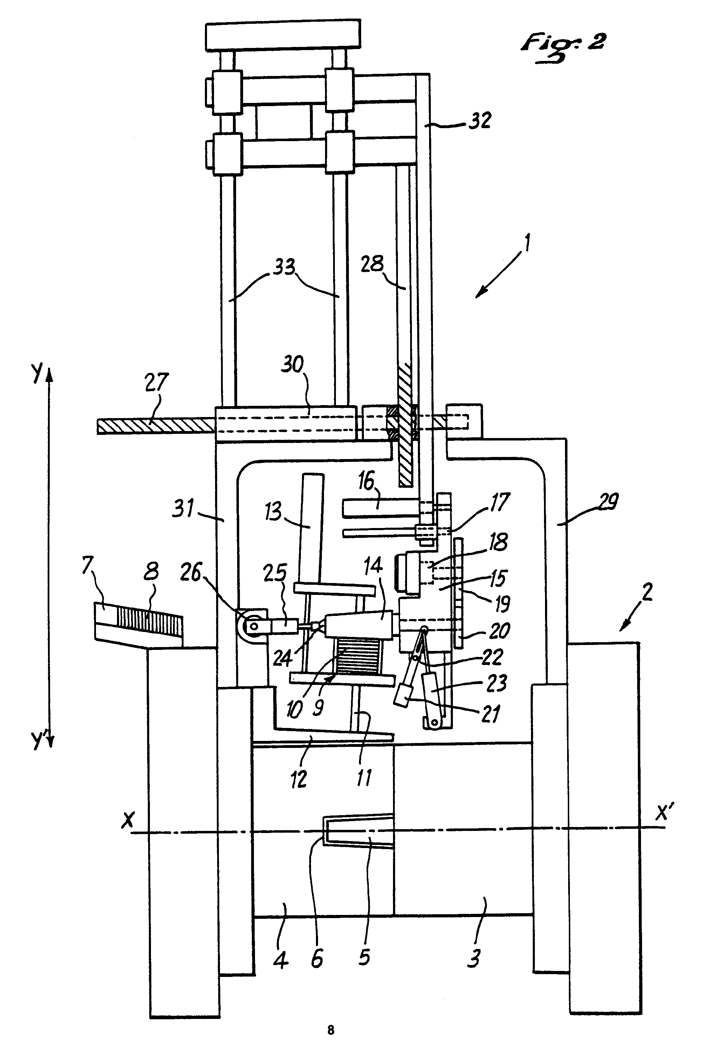

Dans l'étape montrée sur la figure 2 (et également sur la figure 1), le second magasin 9, sous l'action du vérin à course linéaire 13, s'est déplacé le long des guides 11 jusqu'à venir en appui contre la surface latérale de l'organe de prélèvement 14. De façon concomitante, la ventouse 24 portant une première pellicule 8 est venue en appui contre une face d'extrémité 14a de l'organe de prélèvement 14. Les moyens d'aspiration 35,36 (figure 1) de l'organe de prélèvement 14 permettent d'appliquer, d'une part, la première pellicule 8 portée par la ventouse 24, contre ladite face d'extrémité 14a de l'organe 14 et, d'autre part, la pellicule 10 supérieure du magasin 9 contre la surface latérale 14b de l'organe 14.

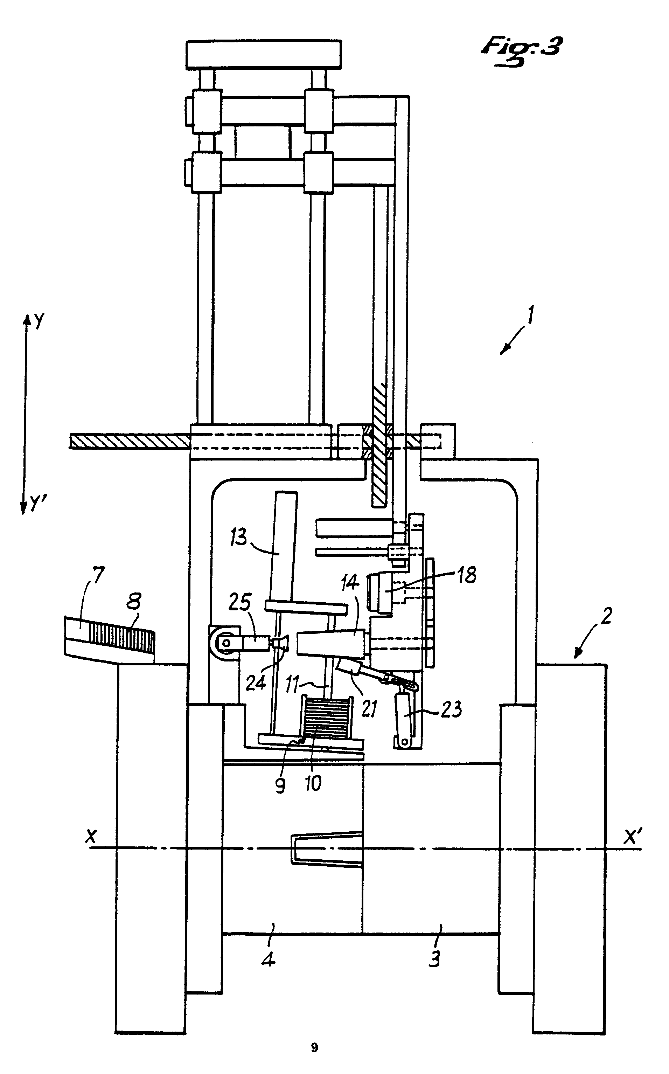

Dans l'étape suivante montrée sur la figure 3, le vérin à course linéaire 25 fait reculer la ventouse 24, et le vérin 13 fait descendre le magasin 9 sur les guides 11, tandis que, simultanément, le galet d'appui 21 est appliqué, par mise en oeuvre du vérin 23, contre l'organe de prélèvement 14. Puis, le vérin rotatif 18 assure l'enroulement de la pellicule 10 sur l'organe 14. Bien évidemment, pendant cette étape, les moyens d'aspiration 35,36 de l'organe 14 continuent d'appliquer les pellicules 8 et 10 contre ledit organe.

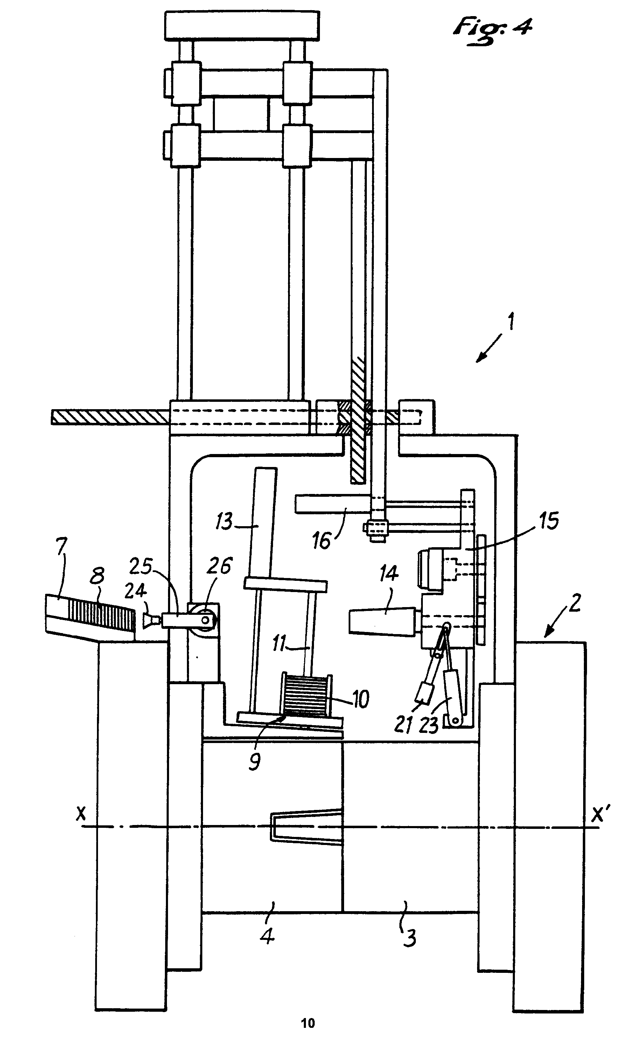

Dans la troisième étape montrée sur la figure 4, le vérin à course linéaire 16 déplace le support mobile 15 de l'organe 14 vers la droite sur la figure, tandis que l'action du vérin 23 éloigne le galet d'appui 21 de l'organe 14. Le vérin rotatif 26 commande la rotation de 180° de la ventouse 24. Les deux pellicules 8 et 10 sont, bien entendu, toujours aspirées contre l'organe 14.

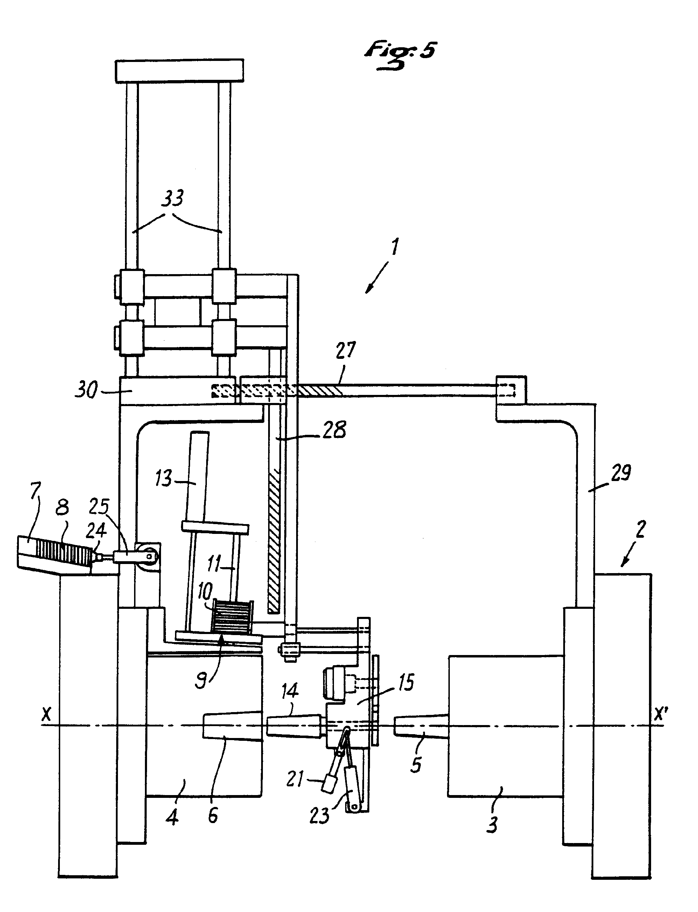

Ensuite, en même temps que le moule s'ouvre, le support 15, et donc l'organe de prélèvement 14, descendent jusqu'à ce que ledit organe 14 se trouve en regard de la matrice 6 du moule, et cela grâce au système de crémaillères croisées 27,28. De façon concomitante, le vérin 25 déplace la ventouse 24 vers le premier magasin 7, où une pellicule 8 est aspirée par ladite ventouse (figure 5).

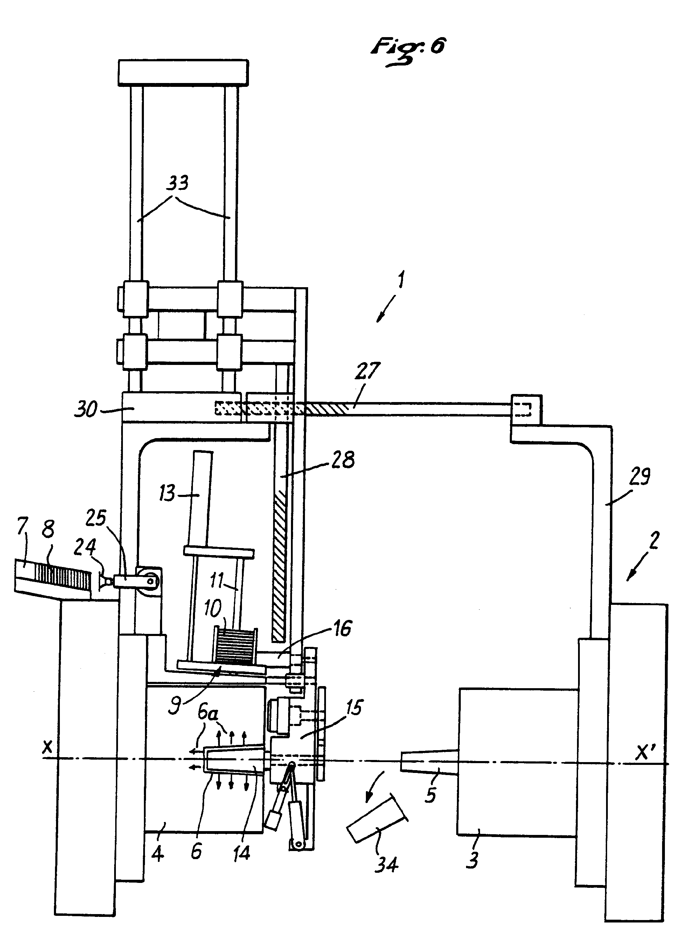

Le vérin 16 fait alors avancer le support 15, et donc l'organe de prélèvement 14, dans la matrice 6 du moule, en même temps que l'objet moulé, revêtu de pellicules, précédent 34 est éjecté du moule. Une fois que l'organe de prélèvement 14 est entièrement logé dans la matrice 6, l'aspiration des deux pellicules contre l'organe 14 est coupée, tandis que ces dernières sont aspirées, par des moyens d'aspiration (flèches 6a) contre la surface latérale et le fond de la matrice 6 (figure 6). Par ailleurs, dans cette même étape, le vérin 25 éloigne la ventouse 24, qui a aspiré une pellicule 8, du premier magasin 7.

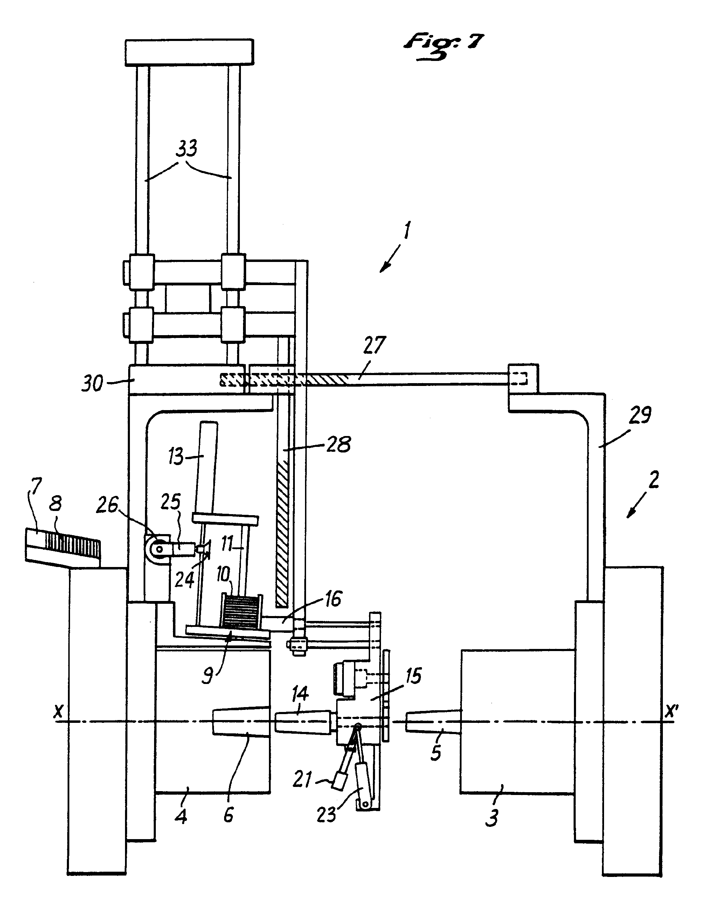

Dans l'étape suivante (figure 7), le vérin 16 ramène l'organe 14 dans la position montrée sur la figure 5, entre les parties mâle 3 et femelle 4 du moule. Le vérin rotatif 26 fait tourner de 180° la ventouse 24, contre laquelle est toujours aspirée une pellicule 8.

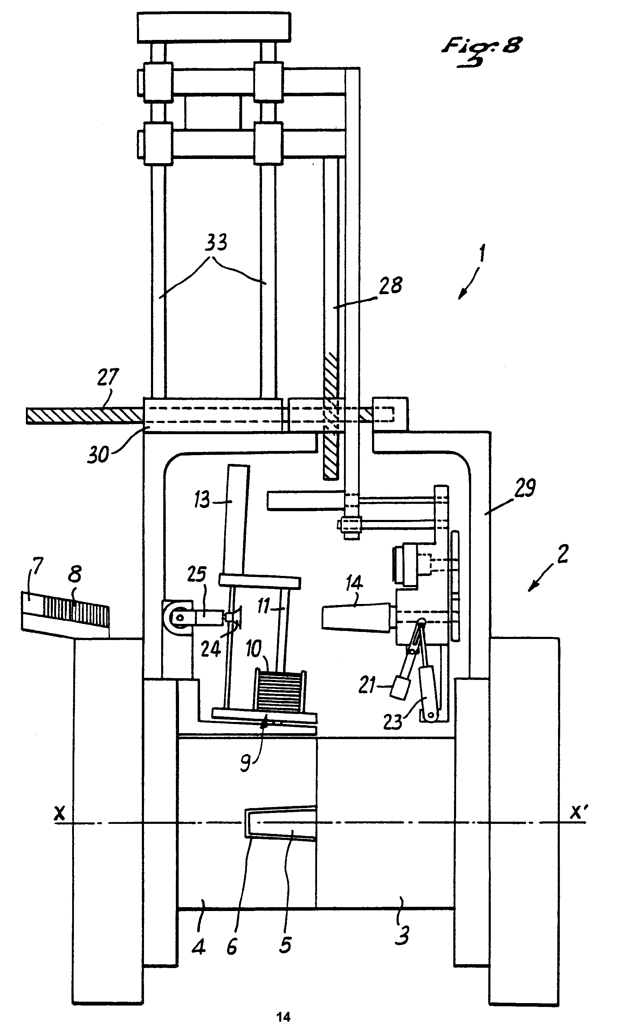

Puis, l'organe de prelèvement 14 est ramené dans la position montrée sur la figure 4, alors que le moule est fermé, et cela toujours grâce aux crémaillères croisées 27 et 28 (figure 8).

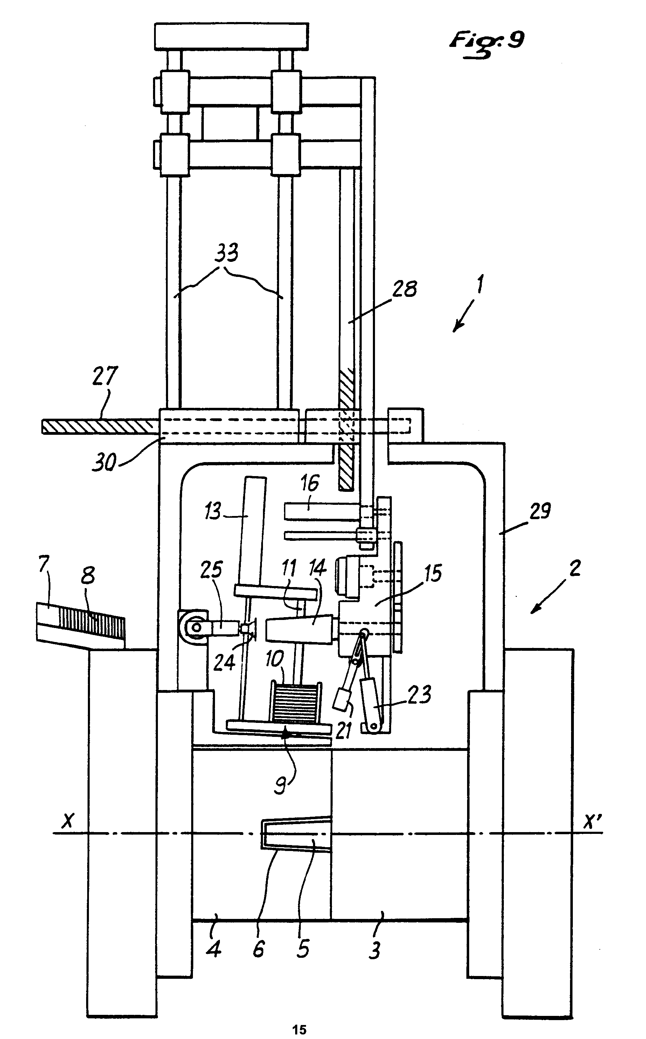

Le vérin 16 fait ensuite avancer l'organe 14 au-dessus du second magasin 9, tandis qu'un nouvel objet moulé, revêtu de deux pellicules, est réalisé dans le moule (figure 9). L'étape suivante correspond à celle de la figure 2, le cycle étant achevé.


## Revendications

1.) Dispositif pour mettre en place, dans une machine de moulage (2) d'un objet comportant deux pièces (3,4), dont au moins l'une est mobile par rapport à l'autre suivant une première direction (X,X'), des pellicules (8, 10) de format déterminé, destinées à servir de revêtement au moins partiel de la surface latérale et d'une face d'extrémité dudit objet, caractérisé en ce qu'il comprend :
    – un premier magasin (7) contenant une pluralité de premières pellicules (8) destinées à revêtir, chacune, une face d'extrémité dudit objet,
    – un second magasin (9) contenant une pluralité de secondes pellicules (10) destinées à revêtir, chacune, la surface latérale dudit objet,
    – un organe (14), présentant une forme extérieure-correspondant à celle de l'objet à revêtir, susceptible de prélever, dans lesdits premier (7) et second (9) magasins, des première (8) et seconde (10) pellicules, respectivement,
    – des premiers (24,35) et seconds (21,36) moyens pour appliquer et maintenir lesdites première (8) et seconde (10) pellicules contre ledit organe (14), et
    – des moyens de transport (27,28) dudit organe de prélèvement (14), avec les pellicules (8,10) qui y sont appliquées, dans la matrice (6) de ladite machine prévue dans l'une desdites pièces (4).

2.) Dispositif selon la revendication 1, caractérisé en ce que l'organe de prélèvement (14) prélève une première pellicule (8) dans ledit magasin (7) par l'intermédiaire de premiers moyens de dépression (24) associés à des moyens de déplacement (25, 26), destinés à amener ladite pellicule (8) dudit magasin (7) audit organe (14), contre une face d'extrémité (14a) de ce dernier, et en ce que des deuxièmes moyens (35) de dépression sont répartis sur ladite face d'extrémité (14a).

3.) Dispositif selon la revendication 1 ou la revendication 2, caractérisé en ce que ledit organe de prélèvement (14) est associé à des moyens (18) destinés à le faire tourner autour de son axe longitudinal de façon que, pendant la rotation dudit organe (14) sur lui-même, la pellicule (10) qui est appliquée sur la surface latérale (14b) s'enroule au moins partiellement autour de celle-ci, et en ce que ledit organe (14) présente des troisièmes moyens de dépression (36) répartis sur toute la surface latérale (14b) de celui-ci.

4.) Dispositif selon la revendication 3, caractérisé en ce qu'un galet d'appui (21) est susceptible de s'appliquer sur la surface latérale (14b) dudit organe (14), de façon à maintenir une seconde pellicule (10) contre celle-ci.

5.) Dispositif selon l'une quelconque des revendications 1 à 4, caractérisé en ce qu'il comprend des moyens de déplacement (16) dudit organe (14) parallèlement à ladite première direction (X,X').

6.) Dispositif selon l'une quelconque des revendications 1 à 5, caractérisé en ce que les moyens de transport (27,28) dudit organe de prélèvement (14) comportent un système de deux crémaillères (27,28) croisées, engrenées l'une avec l'autre, dont l'une (27), parallèle à ladite première direction (X,X'), est solidaire d'une première pièce (3) de ladite machine, et l'autre (28), qui est parallèle à une seconde direction (Y,Y') orthogonale à ladite première direction (X,X') et qui peut coulisser dans un guide (30) solidaire de la seconde pièce (4) de la machine, est solidaire dudit organe de prélèvement (14).

7.) Dispositif selon l'une quelconque des revendications 1 à 6, caractérisé en ce que ledit premier magasin (7) est solidaire de la pièce (4) de la machine de moulage comportant ladite matrice (6).

8.) Dispositif selon l'une quelconque des revendications 1 à 7, caractérisé en ce que ledit second magasin (9) est déplaçable orthogonalement à ladite première direction (X,X').

9.) Dispositif selon l'une quelconque des revendications 1 à 8, caractérisé en ce que ledit organe de prélèvement (14) présente au moins sensiblement une forme tronconique.


## Patentansprüche

1. Vorrichtung zum Einbringen von Filmen in eine Maschine (2) zum Formen eines Gegenstandes, die zwei Teile (3, 4) umfaßt, von denen wenigstens einer in Bezug auf den anderen entlang einer ersten Richtung (X, X') beweglich ist, wobei die Filme (8, 10) ein bestimmtes Format haben und dazu bestimmt sind, wenigstens teilweise als Überzug der seitlichen und der stirnseitigen Oberfläche des Gegenstandes zu dienen, dadurch gekennzeichnet, daß sie umfaßt:

– ein erstes Magazin (7), das eine Mehrzahl erster Filme (8) enthält, von denen jeder dazu bestimmt ist, eine Stirnseite des Gegenstandes zu bedecken,

– ein zweites Magazin (9), das eine Mehrzahl zweiter Filme (10) enthält, von denen jeder dazu bestimmt ist, die seitliche Oberfläche des Gegenstandes zu bedecken,

– ein Werkzeug (14), das eine äußere Form aufweist, die derjenigen des zu bedeckenden Gegenstandes entspricht und das dazu geeignet ist, aus dem ersten (7) bzw. zweiten (9) Magazin einen ersten (8) und zweiten (10) Film aufzunehmen,

– erste (24, 35) und zweite (21, 36) Mittel, um den ersten (8) und zweiten (10) Film an dem Werkzeug (14) anzubringen und festzuhalten und

– Mittel (27, 28) zum Transport des Aufnahmewerkzeugs (14) mit den Filmen (8, 10), die daran angebracht sind, in die Matrize (6) der Maschine, die in einem der beiden Teile (4) vorgesehen ist.

2. Vorrichtung nach Anspruch 1, dadurch gekennzeichnet, daß das Aufnahmewerkzeug (14) einen ersten Film (8) aus dem Magazin (7) mit Hilfe von ersten Unterdruckmitteln (24) aufnimmt, die mit Verlagerungsmitteln (25, 26) verbunden und dazu bestimmt sind, den Film (8) aus dem Magazin (7) auf eine Stirnseite (14a) des Werkzeugs (14) zu bringen, und dadurch, daß zweite Unterdruckmittel (35) über die Stirnseite (14a) verteilt sind.

3. Vorrichtung nach Anspruch 1 oder 2, dadurch gekennzeichnet, daß das Aufnahmewerkzeug (14) mit Mitteln (18) verbunden ist, die dazu bestimmt sind, es um seine Längsachse dergestalt zu drehen, daß während der Rotation des Werkzeugs (14) um sich selbst der Film (10), der auf dessen seitliche Oberfläche (14b) aufgetragen wird, sich wenigstens teilweise um diesen herumrollt, und dadurch, daß das Werkzeug (14) dritte Unterdruckmittel (36) aufweist, die über dessen ganze seitliche Oberfläche (14b) verteilt sind.

4. Vorrichtung nach Anspruch 3, dadurch gekennzeichnet, daß eine Stützrolle (21) dazu geeignet ist, sich an die seitliche Oberfläche (14b) des Werkzeugs (14) anzulegen, um einen zweiten Film (10) auf diesem festzuhalten.

5. Vorrichtung nach einem der Ansprüche 1 bis 4, dadurch gekennzeichnet, daß sie Mittel (16) zur Bewegung des Werkzeugs (14) parallel zur ersten Richtung (X, X') umfaßt.

6. Vorrichtung nach einem der Ansprüche 1 bis 5, dadurch gekennzeichnet, daß die Transportmittel (27, 28) des Aufnahmewerkzeugs (14) ein System zweier gekreuzter Zahnstangen (27, 28) umfaßt, die getriebeartig miteinander verbunden sind, von denen die eine (27), die parallel zur ersten Richtung (X, X') steht, fest mit dem ersten Teil (3) der Maschine verbunden ist, und von denen die andere (28), die parallel zu einer zweiten, zur ersten Richtung (X, X') rechtwinklig stehenden Richtung (Y, Y') ist und in einer fest mit dem zweiten Teil (4) der Maschine verbundenen Führung (30) gleiten kann, mit dem Abgreifwerkzeug (14) fest verbunden ist.

7. Vorrichtung nach einem der Ansprüche 1 bis 6, dadurch gekennzeichnet, daß das erste Magazin (7) fest mit dem Teil (4) der Formmaschine verbunden ist, der die Matrize (6) umfaßt.

8. Vorrichtung nach einem der Ansprüche 1 bis 7, dadurch gekennzeichnet, daß das zweite Magazin (9) rechtwinklig zur ersten Richtung (X, X') verschiebbar ist.

9. Vorrichtung nach einem der Ansprüche 1 bis 8, dadurch gekennzeichnet, daß das Aufnahmewerkezug (14) eine zumindestens wahrnehmbar kegelstumpfartige Form aufweist.

**Claims**

1. Device to place films (8,10) with a specific format in a machine (2) for moulding an object comprising two parts (3,4), at least one of said parts being mobile with respect to the other along a first direction (X,X'), said films being intended to at least partly coat the lateral surface and on extremity face of said object, characterized in that it includes :

– a first magazine (7) containing a plurality of first films (8) each designed to coat one extremity face of said object,

– a second magazine (9) containing a plurality of second films (10) each designed to coat the lateral surface of said object,

– a member (14) having an external shape corresponding to that of the object to be coated and able to respectively take from said first (7) and second (9) magazines first (8) and second (10) films,

– first (24,35) and second (21,36) means to apply and keep in place said first (8) and second (10) films against said member (14), and
– means (27,28) to convey said taking member (14), along with the films (8,10) applied to it, into the matrix (6) of said machine provided in one (4) of said parts.

2. Device according to claim 1,
characterized in that the taking member (14) takes a first film (8) from said magazine (7) by means of first depression means (24) connected to displacement means (25,26) intended to bring said film (8) from said magazine (7) to said member (14) against one extremity face (14a) of the latter, and in that second depression means (35) are distributed over said extremity face (14a).

3. Device according to claim 1 or 2,
characterized in that said taking member (14) is connected to means (18) intended to cause said member to rotate around its longitudinal axis so that, during rotation of said member (14), the film (10) applied on its lateral surface (14b) winds at least partly around the latter, and in that said member (14) has third depression means (36) distributed over the entire lateral surface (14b) of the latter.

4. Device according to claim 3,
characterized in that a support roller (21) is able to be applied on the lateral surface (14b) of said member (14) so as to keep a second film (10) in place against the latter.

5. Device according to any one of claims 1 to 4,
characterized in that it includes means (16) for moving said member (14) parallel to said first direction (X,X').

6. Device according to any one of claims 1 to 5,
characterized in that the means (27,28) for conveying said taking member (14) comprise a system of two crossed racks (27,28) geared with each other, one (27) of which parallel to said first direction (X,X') is integral with a first part (3) of said machine, the other (28), which is parallel to a second direction (Y,Y') orthogonal to said first direction (X,X') and is able to slide into a guide (30) integral with the second part (4) of the machine, is integral with said taking member (14).

7. Device according to any one of claims 1 to 6,
characterized in that said first magazine (7) is integral with the part (4) of the moulding machine comprising said matrix (6).

8. Device according to any one of the claims 1 to 7,
characterized in that said second magazine (9) is able to be moved orthogonal to said first direction (X,X').

9. Device according to any one of claims 1 to 8,
characterized in that said taking member (14) has at least approximately a truncated shape.

Fig.1

*Fig. 2*

*Fig.3*

Fig. 4

Fig. 5

Fig. 6

Fig. 7

Fig. 8

*Fig. 9*